# EUROPÄISCHE PATENTSCHRIFT

(11) **EP 0 503 486 B1**
(45) Veröffentlichungstag und Bekanntmachung des Hinweises auf die Patenterteilung: **23.09.1998**
(21) Anmeldenummer: 92103815.4
(22) Anmeldetag: 06.03.1992
(51) Int. Cl.: H04J 3/14

(54) **Leitungsüberwachung für SDH-Signale**
Line monitoring for SDH-signals
Surveillance de ligne pour des signaux de la hiérarchie numérique synchrone

(30) Priorität: 14.03.1991 DE 4108230
(43) Veröffentlichungstag der Anmeldung: 16.09.1992
(73) Patentinhaber: ALCATEL ALSTHOM COMPAGNIE GENERALE D'ELECTRICITE, 75008 Paris (FR)
(72) Erfinder: Borschel, Hartmut, W-7000 Stuttgart 40 (DE); Elze, Gerhard, W-7016 Gerlingen (DE); Gbur, Klaus-Peter, W-7050 Waiblingen (DE)
(74) Vertreter: Schätzle, Albin, Dipl.-Phys.

(56) Entgegenhaltungen:
- EP-A- 0 166 274
- EP-A- 0 279 452
- EP-A- 0 388 495
- PATENT ABSTRACTS OF JAPAN vol. 011, no. 073 (E-486)5. März 1987 & JP-A-61 230 451 ( NEC CORP. )
- IEEE / IEICE GLOBAL TELECOMMUNICATIONS CONFERENCE 1987 ; 15. - 18. Nov. 1987 ; Tokyo, JP ; Band 2 ; Seiten 895 - 902 ; A. MILES : ' DIGITAL PERFORMANCE MONITORING SYSTEM '
- TELCOM REPORT. Bd. 12, Nr. 6, November 1989, MÜNCHEN DE Seiten 200 - 203 D. SEIDEL 'Höhere Übertragungsqualität durch leistungsfähige Überwachung'
- COMMUTATION ET TRANSMISSION Bd. 11, Nr. 2, Februar 1989, PARIS FR Seiten 85 - 96 J. M. BEAUFILS ET AL. 'NOUVELLE GENERATION DE MULTIPLEXEURS NUMERIQUES DE 2 A 140 Mbit/s'

## Beschreibung

Die Erfindung betrifft ein Verfahren zur Ermittlung von Übertragungsfehlern und eine Vorrichtung dazu nach dem Oberbegriff der Ansprüche 1 und 6.

Die wesentlichen Merkmale der neuen synchronen digitalen Hierarchie (SDH) sind in den CCITT-Empfehlungen G.707, G.708 und G.709 festgelegt. Wie in den asynchronen Hierarchien gibt es auch in der neuen synchronen Hierarchie Multiplexsignale mit unterschiedlichen Bitfolgefrequenzen. Die Multiplexsignale der synchronen digitalen Hierarchie haben jedoch andere Bitfolgefrequenzen und auch einen anderen Rahmenaufbau.

Das elementare Multiplexsignal bei der synchronen digitalen Hierarchie wird als STM-1-Signal (synchronous transport module) bezeichnet und hat eine Bitfolgefrequenz von 155 520 kBit/s. Weitere Multiplexsignale lassen sich durch byteweises Verschachteln mehrerer STM-1-Signale bilden. Diese Multiplexsignale werden als STM-N-Signale bezeichnet, wobei N die Anzahl der STM-1-Signale angibt. Der Rahmenaufbau der Multiplexelemente ist byteorientiert. Ein Byte besteht aus acht Bits. Der Rahmen des STM-1-Signals besteht aus neun Zeilen und aus 270 Spalten zu je einem Byte. Die Reihenfolge der Übertragung verläuft byteweise und zeilenweise von oben nach unten. In den ersten neun Spalten befindet sich die Section Overhead (SOH) - im folgenden Kopfteil genannt -. Die übrigen Spalten des STM-1-Signals enthalten die Payload - im folgenden Nutzteil genannt -. Da die Struktur des Nutzteils für das Verständnis der Erfindung nicht von Bedeutung ist, wird darauf nicht näher eingegangen.

Im Kopfteil sind einer Übertragungsleitung zugeordnete Signale enthalten, wie z.B. das Rahmenkennungswort, das aus 6 Bytes, den Synchronisationsbytes A1, A2 besteht, das Byte B1, das zur Überwachung eines Regenerationsabschnittes dient, das Byte F1, über das ein Dienstkanal übertragen wird, oder Bytes für nationale Verwendung.

Zur Überwachung eines Regenerationsabschnitts ist in den CCITT-Empfehlungen G.783 und G.958 vorgeschrieben, dies über die Messung der Übertragungsfehlerwahrscheinlichkeit zu tun und hierzu die Parität aus den Bits eines ganzen Rahmens zu bilden und diese dann im nachfolgenden Rahmen mit dem Paritätswort B1 zu übertragen. Das Paritätswort B1 wird dann von jedem Zwischengenerator kontrolliert und neu gebildet.

Zur Ermittlung der Übertragungsfehlerwahrscheinlichkeit wird dabei ein bekanntes Verfahren, das Bit Interleaved Parity (BIP)-Verfahren herangezogen. Es wird dabei ein N-Bit-Code erzeugt, wobei N eine ganze Zahl ist, die beim Paritätswort B1 acht beträgt.

Hierzu ist es erforderlich, daß ein Zwischengenerator, der die CCITT-Empfehlungen G.783 und G.958 erfüllt, neben einer Synchronisationsschaltung weitere Signalverarbeitungseinrichtungen, wie ein Demultiplexer, ein Multiplexer, eine umfangreiche Schaltungsanordnung zur Ermittlung der Parität und eine Vorrichtung zur Auswertung und Beschreibung des Paritätswortes B1, benötigt.

Aus EP 0388495 ist ein Verfahren zur Qualitätsüberwachung bekannt. In Zwischenregeneratoren wird die laufende Summe Verletzungen der Coderegel überwacht. Zur Qualitätsüberwachung stehen nach den CCITT-Empfehlungen G.707...G.709 im Abschnittskopf, dem sog. Section Overhead SOH, die Paritätsbytes B1 und B2 zur Verfügung, und zwar ein Paritätsbyte B1 in jedem synchronen Transportmodul STM-N und ein Paritätsbyte B2 in jedem synchronen Transportmodul STM-1. Eine Überwachung über mehrere Digitalsignalleitungsabschnitte ist nach den CCITT-Empfehlungen nicht vorgesehen. Es ist nicht möglich vom Eingang bis zum Ausgang eine feste Verknüpfung von Paritätsbytes herzustellen.

Aus commutation et transmission, Bd. 11, Nr. 2, Februar 1989, Paris, FR, Seiten 85 - 96 sind digitale Multiplexer für 2 bis 140 Mbit/s offenbart. Eine Qualitätsüberwachung erfolgt durch eine Paritätsbestimmung und wird ergänzt durch Zählen der binären Fehler des Rahmenkennwortes. Die Parität eines Rahmens wird bestimmt und das binäre Ergebnis im nachfogenden Rahmen an einer unbenutzten, binären Stelle eingefügt. Zusätzlich werden die binären Fehler des Rahmenkennwortes bestimmt. Die Qualitätsüberwachung erfolgt periodisch.

Der Erfindung liegt nun die Aufgabe zugrunde, ein Verfahren und dazu eine Vorrichtung zur Durchführung des Verfahrens zu schaffen, die es mit einfachen Mitteln ermöglicht, die Übertragungsfehlerwahrscheinlichkeit bei der Übertragung von SDH-Signalen zu ermitteln.

Die Aufgabe wird durch die Merkmale der Ansprüche 1 und 6 gelöst.

Vorteilhafte Ausgestaltungen sind den Unteransprüchen zu entnehmen.

Ein besonderer Vorteil der Erfindung liegt darin, daß die reduzierte Anzahl von Elementen nicht nur Kostenvorteile mit sich bringt, sondern daß der Gesamtenergiebedarf erheblich reduziert wird, was insbesondere dann von Vorteil ist, wenn die Schaltung z.B. in Zwischenregeneratoren enthalten ist, die über eine eigene Energieversorgung betrieben werden müssen.

Ausführungsbeispiele sind im folgenden anhand der Figuren 1 bis 7 beschrieben. Es zeigen:
- Fig. 1: eine erfindungsgemäße Regeneratoreinheit als Blockschaltbild,
- Fig. 2: den Kopfteil eines STM-1-Signals,
- Fig. 3: ein erstes Ausführungsbeispiel einer erfindungsgemäßen Übertragungsfehlererkennung,
- Fig. 4: ein zweites Ausführungsbeispiel einer erfindungsgemäßen Übertragungsfehlererkennung,
- Fig. 5: die erfindungswesentlichen Teile einer Regeneratorstation für mehrere Übertragungsleitungen,
- Fig. 6: einen Abschnitt einer ersten übertragungsstrecke mit mehreren Regenerationsabschnitten, und
- Fig. 7: einen Ausschnitt einer zweiten Übertragungsstrecke mit mehreren Regenerationsabschnitten.

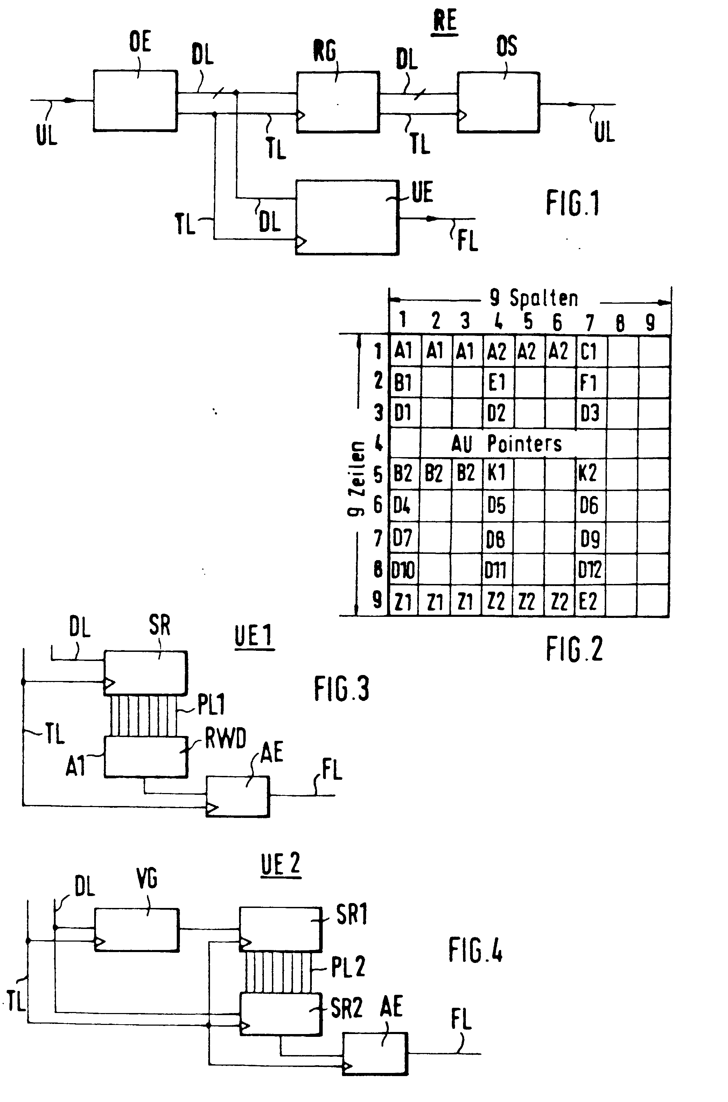

In Fig. 1 ist eine erfindungsgemäße Regeneratoreinheit RE schematisch als Blockschaltbild abgebildet. Dabei sind nur die erfindungswesentlichen Komponenten herausgestellt. Ein Empfänger OE für den Empfang von optischen Signalen ist empfangsseitig mit einem Lichtwellenleiter als Übertragungsleitung UL verbunden. Über die Übertragungsleitung UL werden Multiplexsignale übertragen, die eine Multiplexstruktur nach den CCITT-Empfehlungen G.707, G.708 und G.709 aufweisen und in denen ein Rahmen mit einem Kopfteil und einem Nutzteil beschrieben ist. Zur einfacheren Beschreibung wird im folgenden von der Übertragung von STM-4-Signalen ausgegangen, obwohl der Vorteil der Erfindung bei der Übertragung höherer Multiplexsignale, z.B. STM-16-Signale, stärker zum Tragen kommt.

Der Empfänger OE enthält einen Optisch-Elektrisch-Wandler und nachfolgend eine Schaltungsanordnung zur Taktableitung und zur Synchronisierung des Empfängers OE mit dem Rahmen und entsprechend einen Ausgang für eine Taktleitung TL und einen Ausgang für eine Datenleitung DL, in der die STM-Signale seriell übertragen werden. Die Taktleitung TL und die Datenleitung DL sind mit einem Regenerator RG und einer Übertragungsfehlererkennung UE verbunden. Der Regenerator RG ist wiederum über die Datenleitung DL und der Taktleitung TL mit einem Sender OS verbunden. Der Sender OS enthält einen Elektrisch-Optisch-Wandler und einen Ausgang für einen Lichtwellenleiter als Übertragungsleitung UL. Die Übertragungsfehlererkennung UE kann auch zwischen dem Regenerator RG und dem Sender OS mit der Datenleitung DL und der Taktleitung TL verbunden sein. Die Schaltungsanordnung zur Taktableitung und Synchronisation kann auch im Regenerator RG enthalten sein.

Im Regenerator RG erfolgt die Regeneration des Bitstromes hinsichtlich der Impulsform, der zeitlichen Länge und der Amplitude auf bekannte Art und Weise, ohne daß das STM-4-Signal aufgelöst werden muß. Die Regeneration des Bitstromes als solche ist nicht Gegenstand dieser Erfindung und wird daher auch nicht näher ausgeführt.

Die Ermittlung der Übertragungsfehlerwahrscheinlichkeit erfolgt funktionell getrennt von der Regeneration des Bitstromes in einer eigens dafür vorgesehenen Übertragungsfehlererkennung UE. Der Regenerator RG und die Übertragungsfehlererkennung UE können dabei baulich durchaus in einer Einheit angeordnet sein.

Zur Ermittlung der Übertragungsfehlerwahrscheinlichkeit ist es bei der vorliegenden Erfindung erforderlich, daß der Inhalt und die Position wenigstens eines Wortes im Kopfteil des STM-4-Signals bekannt ist. Dieses bekannte Wort ist auch in der Übertragungsfehlererkennung UE als Referenzwort abrufbar und wird dort mit dem Referenzwort verglichen. Aus dem Vergleichsergebnis ist die Übertragungsfehlerwahrscheinlichkeit ableitbar.

In Fig. 2 ist der Kopfteil SOH eines STM-Signals abgebildet. Zur einfacheren Darstellung wurde der Kopfteil SOH eines STM-1-Signals abgebildet, der prinzipiell auch dem Kopfteil eines STM-4-Signals entspricht. In der ersten Zeile ist z.B. das Rahmenkennungswort definiert, das zur Synchronisation auf den Rahmenanfang des STM-Signals benutzt wird. Das Wort besteht aus drei Synchronisationsbytes A1 und aus drei Synchronisationsbytes A2. Die Bitfolge ist stets für A1 = 11110110 und für A2 = 00101000. D.h., das Rahmenkennungswort oder auch nur Teile davon sind geeignet, um zur Ermittlung der Übertragungsfehlerwahrscheinlichkeit herangezogen zu werden.

Ein erstes Ausführungsbeispiel einer Übertragungsfehlererkennung UE1 ist in Fig. 3 abgebildet. Sie weist im einfachsten Fall ein Schieberegister SR auf, dem der auf der Datenleitung DL anliegende Bitstrom zugeführt wird und das über die Taktleitung TL getaktet wird. Das Schieberegister SR ist über einen parallelen Ausgang, der Parallelleitung PL1 mit einem Referenzwortdecoder RWD verbunden, in dem der im Schieberegister SR anliegende Bitstrom mit einem im Referenzwortdecoder RWD eingegebenes Referenzwort verglichen wird. Als Vergleichsergebnis werden die Anzahl der übereinstimmenden Bits pro Wort oder die Anzahl der nicht übereinstimmenden Bits pro Wort im Referenzwortdecoder RWD ermittelt und an eine Auswerteeinheit AE weitergeleitet. Im einfachsten Fall besteht das Referenzwort aus einem Byte, d.h. 8 Bits, es können aber auch andere Wortlängen vorgegeben werden.

Eine zweite Ausführung einer Übertragungsfehlererkennung UE2 ist in Fig. 4 abgebildet. Sie weist ein erstes Schieberegister SR1 und ein zweites Schieberegister SR2 auf, die beide mit der Datenleitung DL und der Taktleitung TL verbunden sind, wobei der Bitstrom zum Schieberegister SR1 durch ein auf der Datenleitung DL dem Schieberegister SR1 vorgeschaltetes Verzögerungsglied VG verzögert wird. Das Schieberegister SR1 ist über einen parallelen Ausgang, einer Parallelleitung PL2, mit dem Schieberegister SR2 derart verbunden, daß die jeweils in den Schieberegistern anliegenden Zustände miteinander verglichen werden können. Das Schieberegister SR2 ist mit einem Decoder erweitert, der das Vergleichsergebnis an eine Auswerteeinheit AE weitergibt.

Im Gegensatz zur ersten Ausführungsart ist bei der zweiten Ausführungsart der Übertragungsfehlererkennung UE2 kein Referenzwort fest eingeschrieben. Diese Art der Übertragungsfehlererkennung setzt voraus, daß dem Kopfteil SOH zwei Worte mit gleicher Bitfolge enthalten sind, wobei die Bitfolge als solche in der Übertragungsfehlererkennung UE2 nicht bekannt zu sein braucht. Günstigerweise liegen diese beiden Worte im Bitstrom direkt hintereinander. In diesem Fall bewirkt das Verzögerungsglied VG eine Verzögerung des Bitstromes um ein Wort, wodurch die beiden Worte in den Schieberegistern SR1 und SR2 verglichen werden können. Liegen beide Worte weiter auseinander, muß der Bitstrom im Verzögerungsglied VG um die Wortlänge und den Abstand zwischen den Wörtern verzögert werden. Als Wortlänge wird, wie bei der ersten Ausführungsart, günstigerweise ein Byte mit 8 Bit gewählt.

Die Auswerteeinheit AE ist für beide Ausführungsarten der Übertragungsfehlererkennungen UE1 und UE2 gleichermaßen angeordnet und ausgebildet. Die Auswerteeinheit AE wird über die Taktleitung TL getaktet und ist daher in der Lage, anhand der mitgeteilten Übereinstimmungen bzw. Nichtübereinstimmungen eine Fehlerrate, die Anzahl von Fehlern pro Rahmen oder die Anzahl von Fehlern hinsichtlich einer anderen Bezugsgröße als Information über die Übertragungsfehlerwahrscheinlichkeit zu ermitteln und dieses Ergebnis als Fehlermeldung über die Fehlerleitung FL einer Zentrale mitzuteilen. Das Ergebnis kann auch darin bestehen, daß an die Zentrale nur mitgeteilt wird, ob ein festvorgegebener Wert der Übertragungsfehlerwahrscheinlichkeit überschritten wird oder nicht, d.h., daß nur ermittelt wird, ob eine Störung vorliegt oder nicht. Das Ergebnis wäre in diesem Fall eine Störmeldung.

Die Auswerteeinheit muß nicht zwangsläufig in der Regeneratoreinheit RE angeordnet sein. Sie kann sich auch im nachfolgend beschriebenen Interface oder im nachfolgend beschriebenen Regenerator RG1 oder einer anderen Einheit befinden.

Bei der Ermittlung von Übertragungsfehlern in den STM-N-Signalen werden die Fehler vorteilhafterweise pro Rahmen ermittelt und im Rahmentakt an die Zentrale Z weitergeleitet. STM-N-Signale haben eine Rahmenlänge von 125 ms, was eine Übertragungsrate der Fehlerübertragung von nur 8 kHz bedeutet. Bei umfangreichen Fehlermeldungen kann es von Vorteil sein, diese nur für jeden n-ten Rahmen mit n = 2, 3, ... zu übertragen, was eine entsprechende Reduzierung der Übertragungsrate zur Folge hätte.

Die Position der zu vergleichenden Worte aus dem STM-N-Modul sind der Auswerteeinheit AE bekannt. Sie wertet nur die Vergleichsergebnisse bezüglich dieser Worte zur Erkennung der Übertragungsfehler aus.

In der Taktleitung TL liegt neben dem Bittakt daraus abgeleitet auch der Bytetakt und der Rahmentakt an. Entsprechend ihrer Ausgestaltung werten die Elemente der Regeneratoreinheit RE den oder die für sie erforderlichen Taktimpulse aus. So sind für das Verzögerungsglied VG und die Schieberegister SR, SR1 und SR2 der Bittakt erforderlich, für die Auswerteeinheit AE dagegen der Rahmentakt und je nach technischer Ausführung der Bittakt oder der Bytetakt. Die Ermittlung der Position der zu vergleichenden Worte kann grundsätzlich auch in den Schieberegistern erfolgen. In diesem Fall werden der Auswerteeinheit AE nur die relevanten Vergleichsergebnisse zugeführt.

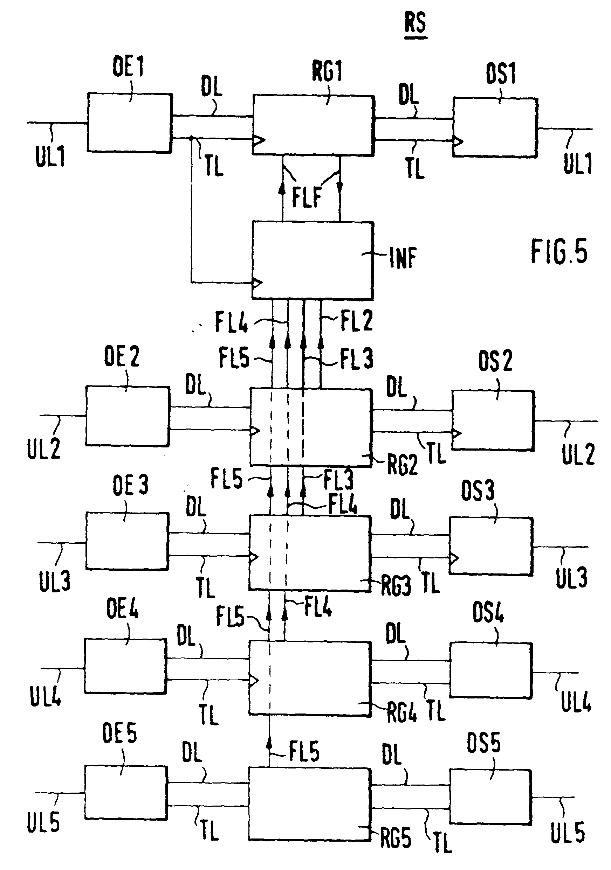

In Fig. 5 ist ein Ausführungsbeispiel für eine Regeneratorstation RS mit fünf Übertragungsleitungen UL1 bis UL5 abgebildet. Für jede Übertragungsleitung UL1 bis UL5 ist ein Empfänger OE1 bis OE5, ein Regenerator RG1 bis RG5 und ein Sender SE1 bis SE5 vorhanden. In den abgebildeten Regeneratoren RG2 bis RG5 sind die dazugehörigen Übertragungsfehlererkennungen UE nicht getrennt abgebildet sondern nur durch ihre Fehlerleitungen FL2 bis FL5 als den Regeneratoren RG2 bis RG5 zugehörig eingezeichnet. Die Funktionsweise der Regeneratoren RG2 bis RG5 ist schon im Ausführungsbeispiel zur Fig. 1 beschrieben.

Der Regenerator RG1 stellt einen bekannten Regenerator dar, der die CCITT-Empfehlung G.958 erfüllt, d.h., der im Falle der Übertragung von STM-4-Signalen oder Signalen höherer Multiplikationsstufe zur Ermittlung der Übertragungsfehlerwahrscheinlichkeit durch Paritätsbestimmung einen Demultiplexer, nachfolgend einen Multiplexer und dazwischenliegend eine Schaltungsanordnung zur Paritätsbestimmung und einer Schaltungsanordnung zum Einfügen von Bits in das Paritätsbyte B1 aufweist, d.h., daß im Regenerator RG1 Bits in den Kopfteil SOH eingefügt werden können.

Weiter können im Regenerator RG1 auch der Dienstkanal benutzt, d.h., daß Byte F1 oder ander z.B. für nationalen Gebrauch bestimmte oder noch nicht belegte Bytes benutzt werden.

Der Regenerator RG1 kann somit zur Übertragung der Übertragungsfehlerwahrscheinlichkeit, die von den Regeneratoren RG2 bis RG5 ermittelt wurden, im Kopfteil eines STM-4-Signals oder mit anderen Worten gesagt, Inband übertragen. Hierzu sind die Fehlerleitungen FL2 bis FL5 mit einem Interface INF verbunden, über das die Übertragungsfehlerwahrscheinlichkeit über die Fehlerleitung FLF in den Dienstkanal F1 eingefügt wird.

Das Einfügen erfolgt konform mit den CCITT-Empfehlungen und ist als solches bekannt.

Das Interface INF wird über eine Taktleitung TL, die mit dem Empfänger OE1 verbunden ist, getaktet. Eine gesonderte Synchronisation zwischen den Regeneratoren RG2 bis RG5 mit dem Interface INF ist nicht notwendig, da die Übertragung über die Fehlerleitung mit einer Übertragungsrate von nur 8 kHz oder einem Bruchteil davon erfolgt. Im Interface INF werden die Übertragungsfehlerwahrscheinlichkeit an den einzelnen Regeneratoren RG2 bis RG5 in einer vorgegebenen Form so zusammengefaßt, daß in der Zentrale Z ermittelt werden kann, welche Übertragungsfehlerwahrscheinlichkeit zu welchem Regenerationsabschnitt gehört. Hierzu kann das z.B. in den Dienstkanal F1 eingefügte Fehlersignal eine Kennung für den Regenerationsabschnitt und eine Nummer zur Identifikation der Übertragungsleitung UL2 bis UL5 enthalten. Die Fehlersignale auf den Fehlerleitungen FLF können seriell als Blockfehlerzahlen übertragen werden.

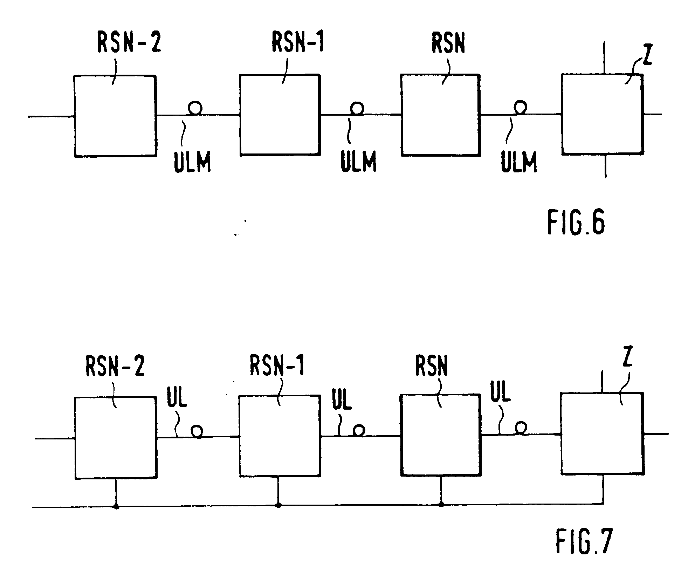

In Fig. 6 sind die drei letzten Regeneratorstationen RSN-2, RSN-1 und RSN stellvertretend für alle Regeneratorstationen einer Übertragungsstrecke und eine Zentrale Z abgebildet. Die Regeneratorstationen RSN... sind durch die Übertragungsleitungen ULM miteinander und mit der Zentrale Z verbunden. Eine solche Übertragungsstrecke kann bis zu 50 Regeneratorstationen RS aufweisen, wobei die Abschnitte zwischen den Regeneratorstationen RSN Regenerationsabschnitte darstellen, die für jede Übertragungsleitung UL einzeln zur Übertragungsfehlerüberwachung kontrolliert werden. Liegt nun eine Störung oder Unterbrechung einer Übertragungsleitung vor, kann anhand der in jeder Regeneratoreinheit RE ermittelten Übertragungsfehlerwahrscheinlichkeit in der Zentrale Z sofort ermittelt werden, in welchem Regenerationsabschnitt die Störung oder Unterbrechung auftritt. Im Gegensatz zu den die CCITT-Empfehlung G.958 erfüllenden Regeneratoren RG1 mit einer Übertragungsfehlerüberwachung, bei der mit dem B1-Byte jeweils die Übertragungsfehlerwahrscheinlichkeit zwischen zwei Regeneratorstationen ermittelt wird, wird bei einer erfindungsgemäßen Regeneratoreinheit RE die Übertragungsfehlerwahrscheinlichkeit hinsichtlich nur einer Datenquelle ermittelt, sie nimmt also von Regeneratorstation RS zu Regeneratorstation RS zu. Bei der Übertragung von Störmeldungen müßte in diesem Falle die Schwelle von Regeneratorstation RS zu Regeneratorstation RS erhöht werden. Um diese absolute Übertragungsfehlerwahrscheinlichkeit zu begrenzen, wird das Wort oder werden die Worte, die zur erfindungsgemäßen Ermittlung der Übertragungsfehlerwahrscheinlichkeit herangezogen werden, in einem Ausführungsbeispiel in jeder fünften, in einer die CCITT-Empfehlung G.958 erfüllenden Regeneratoreinheit regeneriert. Hierzu wird die die CCITT-Empfehlung G.958 erfüllende Regeneratoreinheit RG1 in jeder nachfolgenden Regeneratorstation RS mit den erfindungsgemäßen Regeneratoreinheiten RG2 bis RG5 zyklisch vertauscht, so daß jede Übertragungsleitung ULN, N = 1, 2, 3, 4, 5, nacheinander vier erfindugnsgemäße und eine die CCITT-Empfehlung G.958 erfüllende Regeneratoreinheit aufweist. Natürlich kann das Verhältnis von Regeneratoreinheiten, die die CCITT-Empfehlung G.958 erfüllen, zu den erfindungsgemäßen Regeneratoreinheiten pro Übertragungsleitung ULN je nach Bedarf variiert werden. Die Zahl 5 für die Anzahl von Übertragungsleitungen stellt nur ein Beispiel dar, sie kann auch größer oder kleiner sein.

In Fig. 7 ist eine Übertragungsstrecke abgebildet, bei der die Fehlerleitung FL nicht über ein STM-N-Signal, sondern über eine externe zusätzliche Leitung FLZ der Zentrale Z zugeführt wird. Diese Ausführung bietet sich dann an, wenn sich in den Regeneratorstationen RSN nur erfindungsgemäße Regeneratoren RG befinden oder die Inbandübertragung aus anderen Gründen nicht vorteilhaft erscheint.

Ein Netzknoten, ein Endknoten oder auch ein für die synchrone digitale Übertragung vorgesehener Netzwerkmanager können eine Zentrale Z darstellen. Im Falle des Ausführungsbeispiels zu Fig. 7 kann als Zentrale Z auch eine beliebige Einrichtung angesehen werden, die zur Inbandbeschreibung fähig ist und die die Übertragungsfehlerwahrscheinlichkeit in den Kopfteil eines STM-N-Signals einfügen kann.

Die Ausführungsbeispiele beziehen sich auf optische Übertragungssysteme. Durch die Wahl anderer Sender oder Empfänger kann die Erfindung auch bei der Funkübertragung oder elektrischer leitungsgebundener Übertragung angewendet werden.

Der Vorteil der erfindungsgemäßen Regeneratoren RG liegt gegenüber den bekannten die CCITT-Empfehlung G.958 erfüllenden Regeneratoren im Wegfall von Baugruppen, wie z.B. dem Multiplexer, dem Demultiplexer und der Baugruppe zur Paritätsbestimmung und der Baugruppe zum Einschreiben der Parität in den Kopfteil eines STM-N-Signals. Damit verbunden benötigen die erfindungsgemäßen Regeneratoren RE erheblich weniger Energie, wodurch sich auch der Aufwand zur Kühlung reduziert. Der geringere Energiebedarf erlangt bei optischen Übertragungsstrecken besondere Bedeutung, wenn diese z.B. durch ein nichtbewohntes Gebiet geführt wird, und die Regeneratorstationen RS mit lokal erzeugtem Strom, z.B. durch Solarzellen, versorgt werden müssen.

Die Ausführungsbeispiele beziehen sich nur auf die Übertragung von Daten in eine Richtung. Zur bidirektionalen Übertragung befinden sich in den Regeneratorstationen RS jeweils zwei Regeneratoreinheiten RE, eine zur Übertragung in die eine und eine andere Regeneratoreinheit zur Übertragung in die entgegengesetzte Richtung. Dabei kann die Regeneratorstation RS zur Übertragung in die eine Richtung nur erfindungsgemäße Regeneratoreinheiten RE aufweisen, deren Fehlerleitungen FL über ein Interface zur Inbandübertragung mit einer Regeneratoreinheit für die entgegengesetzte Richtung, die die CCITT-Empfehlung G.958 erfüllt, verbunden sein.

## Patentansprüche

1. Verfahren zur Ermittlung von Übertragungsfehlern in einem STM-N-Multiplexsignal, das eine Struktur nach den CCITT-Empfehlungen G.707, G.708 und G.709 aufweist, in denen ein Multiplexrahmen mit einem Kopfteil und einem Nutzteil beschrieben ist und bei dem die Rahmensynchronisation hergestellt ist,
**dadurch gekennzeichnet,**
daß wenigstens ein bekanntes, an einem bekannten Platz im Kopfteil (SOH) des Rahmens befindliches Wort mit einem Referenzwort verglichen und aus dem Vergleichsergebnis eine Information über die Übertragungsfehlerwahrscheinlichkeit abgeleitet wird.

2. Verfahren nach Anspruch 1, dadurch gekennzeichnet, daß der Kopfteil (SOH) wenigstens zwei gleiche bekannte, an bekannten Plätzen befindliche Wörter (A1, A2) enthält, und wenigstens eines dieser Wörter als Referenzwort herangezogen wird.

3. Verfahren nach Anspruch 1, dadurch gekennzeichnet, daß das Referenzwort in einem Referenzwortdecoder (RWD) eingeschrieben und dort wenigstens mit einem bekannten an einem bekannten Platz des Kopfteils (SOH) befindlichen Wort verglichen wird.

4. Verfahren nach einem der Ansprüche 1 bis 3, dadurch gekennzeichnet, daß als bekanntes, an einem bekannten Platz im Kopfteil (SOH) befindliches Wort ein Synchronisationswort (A1, A2) oder Teile davon herangezogen werden.

5. Verfahren nach einem der Ansprüche 1 bis 4, dadurch gekennzeichnet,
- daß es zur Überwachung eines Regeneratorabschnitts eines Übertragungsweges herangezogen wird,
- daß die Information über die Übertragungsfehlerwahrscheinlichkeit einer Übertragungseinheit (RG1) zugeführt wird, die nach den CCITT-Empfehlungen in der Lage ist, die Information über die Übertragungsfehlerwahrscheinlichkeit in einen vorgegebenen Platz (F1) des Kopfteils (SOH) einzufügen, und
- daß die Information über die Übertragungsfehlerwahrscheinlichkeit an eine Zentrale (Z) übertragen und dort weitergeleitet oder ausgewertet wird.

6. Vorrichtung zur Ermittlung von Übertragungsfehlern in einem STM-N-Multiplexsignal, das eine Multiplexstruktur nach den CCITT-Empfehlungen G.707, G.708 und G.709 aufweist, in denen ein Multiplexrahmen mit einem Kopfteil und einem Nutzteil beschrieben ist und die eine Synchronisationsschaltung zur Synchronisation des Multiplexrahmens mit der Vorrichtung enthält, **dadurch gekennzeichnet**, daß sie Mittel (UE, UE1, UE2) enthält, die wenigstens ein bekanntes, an einem bestimmten Platz im Kopfteil (SOH) des Rahmens befindliches Wort (Al, A2) mit einem Referenzwort vergleichen und Mittel (AE) enthält, die aus dem Vergleichsergebnis eine Information über die Übertragungsfehlerwahrscheinlichkeit ableiten und einem Ausgang (FL) zuführen.

7. Einrichtung zur Überwachung eines Regeneratorabschnitts eines Übertragungsweges mit einer Vorrichtung nach Anspruch 6, dadurch gekennzeichnet, daß die Mittel (UE, UE1, UE2) zur Ableitung der Information über die Übertragungsfehlerwahrscheinlichkeit mit einer Übertragungseinheit (RG1) verbunden ist, die nach den CCITT-Empfehlungen in der Lage ist, die Information über die Übertragungsfehlerwahrscheinlichkeit in einen vorgegebenen Platz (F1) des Kopfteils (SOH) einzufügen.

8. Einrichtung nach Anspruch 7, dadurch gekennzeichnet, daß mehrere Regeneratoreinrichtungen (RE) gemäß Anspruch 1 mit wenigstens einer die CCITT-Empfehlung G.958 erfüllende Regeneratoreinrichtung (RG1) zu einer Regeneratorstation (RS) zusammengefaßt sind und die Fehlerleitungen (FL) über ein Interface (INF) mit der die CCITT-Empfehlung G.958 erfüllende Regeneratoreinrichtung (RG1) verbunden sind.

9. Einrichtung nach Anspruch 7 oder 8, dadurch gekennzeichnet, daß sie zur Auswertung der in den Kopfteil (SOH) des Multiplexrahmens eingefügte Information über die Übertragungsfehlerwahrscheinlichkeit (F1) mit einer Zentrale (Z) verbunden ist, in der die Information über die Übertragungsfehlerwahrscheinlichkeit ausgewertet oder weitergeleitet wird.

10. Vorrichtung nach Anspruch 6, dadurch gekennzeichnet, daß der Ausgang mit einer Zentrale (Z) verbunden ist, in der die Information über die Übertragungsfehlerwahrscheinlichkeit ausgewertet oder weitergeleitet wird.

11. Vorrichtung nach einem der Ansprüche 6 bis 10, dadurch gekennzeichnet, daß die Übertragungsfehlererkennung (UE, UE1, UE2) mit der Synchronisationsschaltung zur Synchronisation des Multiplexrahmens integriert ausgebildet ist.

## Claims

1. A method of determining transmission errors in an STM-N multiplex signal structured in accordance with CCITT recommendations G.707, G.708 and G.709, which describe a multiplex frame with a head part and an active part and with an established frame synchronization, characterized in that at least one known word located in a known place in the head part (SOH) of the frame is compared with a reference word, and information about the probability of an error transmission is derived from the comparison.

2. A method as claimed in claim 1, characterized in that the head part (SOH) contains at least two words which are also known and are located in known places (A1, A2), and at least one of these words is used as a reference word.

3. A method as claimed in claim 1, characterized in that the reference word is entered into a reference word decoder (RWD) where it is compared with at least one known word located in a known place of the head part (SOH).

4. A method as claimed in one of claims 1 to 3, characterized in that the known word located in a known place of the head part (SOH) is a synchronization word (A1, A2) or parts thereof.

5. A method as claimed in one of claims 1 to 4, characterized in that
- it is used to monitor a regenerator section of a transmission path,
- the information about the transmission error probability is routed to a transmission unit (RG1) which, in accordance with the CCITT recommendations, is in a position to insert the information about the transmission error probability into a predetermined place (F1) of the head part (SOH), and
- the information about the transmission error probability is transmitted to a central (Z) where it is evaluated or routed further.

6. A device for determining transmission errors in a STM-N multiplex signal with a multiplex structure in accordance with CCITT recommendations G.707, G.708 and G.709, which describe a multiplex frame with a head part and an active part, and contains a synchronization circuit for synchronizing the multiplex frame with the device, characterized in that it contains means (UE, UE1, UE2) which compare at least one known word (A1, A2) located in a predetermined place of the head part (SOH) with a reference word, and contains means (AE) which derive information from the comparison about the transmission error probability, and route it to an output (FL).

7. A device for monitoring a regenerator section of a transmission path with a device as claimed in claim 6, characterized in that the means (UE, UE1, UE2) for deriving the information about the transmission error probability are connected to a transmission unit (RG1), which in accordance with the CCITT recommendations is in a position to insert the information about the transmission error probability into a predetermined place (F1) of the head part (SOH).

8. A device as claimed in claim 7, characterized in that several regenerator devices (RE) as claimed in claim 1 are combined with at least one regenerator device (RG1) which complies with the CCITT recommendation G.958 into a regenerator station (RS), and the error lines (FL) are connected via an interface (INF) to the regenerator device (RG1) which complies with the CCITT recommendations.

9. A device as claimed in claim *7* or 8, characterized in that, to evaluate the information about the transmission error probability (F1) inserted into the head part (SOH) of the multiplex frame, the device is connected to a central (Z) in which the information about the transmission error probability is evaluated or routed further.

10. A device as claimed in claim 6, characterized in that the output is connected to a central (Z) in which the information about the transmission error probability is evaluated or routed further.

11. A device as claimed in one of claims 6 to 10, characterized in that the synchronization circuit is integrated into the transmission error recognition (UE, UE1, UE2) for synchronizing the multiplex frame.

## Revendications

1. Méthode pour le calcul d'erreurs de transmission dans un signal multiplex STM-N, qui présente une structure conforme aux recommandations du CCITT G.707, G.708 et G.709, dans lesquelles un cadre multiplex est décrit avec une partie supérieure et une partie utile et avec laquelle la synchronisation du cadre est établie, caractérisée en ce qu'au moins un mot connu et se trouvant à un emplacement connu dans la partie supérieure (SOH) du cadre est comparé à un mot de référence et une information sur la probabilité d'erreur de transmission est déduite du résultat de la comparaison.

2. Méthode selon la revendication 1, caractérisée en ce que la partie supérieure (SOH) contient au moins deux mots (A1, A2) connus, identiques et situés à des emplacements connus, et en ce qu'au moins l'un de ces mots est utilisé comme mot de référence.

3. Méthode selon la revendication 1, caractérisée en ce que le mot de référence est inscrit dans un décodeur de mot de référence (RWD), où il est comparé au moins avec un mot connu et se trouvant à un emplacement connu de la partie supérieure (SOH).

4. Méthode selon l'une quelconque des revendications 1 à 3, caractérisée en ce qu'on utilise un mot de synchronisation (A1, A2) ou des parties de ce mot comme mot connu et se trouvant à un emplacement connu dans la partie supérieure (SOH).

5. Méthode selon l'une quelconque des revendications 1 à 4, caractérisée
- en ce qu'elle est utilisée pour surveiller une partie de régénérateur d'une voie de transmission,
- en ce que l'information sur la probabilité d'erreur de transmission est amenée à une unité de transmission (RG1), qui est en mesure d'après les recommandations du CCITT d'insérer l'information sur la probabilité d'erreur de transmission à un emplacement prédéfini (F1) de la partie supérieure (SOH) et
- en ce que l'information sur la probabilité d'erreur de transmission est transférée à un central (Z), où elle est transmise ou analysée.

6. Appareil pour déterminer des erreurs de transmission dans un signal multiplex STM-N, qui présente une structure multiplex conforme aux recommandations du CCITT G.707, G.708 et G.709, dans lesquelles un cadre multiplex est décrit avec une partie supérieure et une partie utile et qui contient un circuit de synchronisation pour la synchronisation du cadre multiplex avec l'appareil, caractérisé en ce qu'il contient des moyens (UE, UE1, UE2) qui comparent à un mot de référence au moins un mot (A1, A2) connu et se trouvant à un certain emplacement dans la partie supérieure (SOH) du cadre et contient des moyens (AE) qui déduisent du résultat de la comparaison une information sur la probabilité d'erreur de transmission et l'amènent à une sortie (FL).

7. Dispositif pour surveiller une partie de régénérateur d'une voie de transmission avec un appareil selon la revendication 6, caractérisé en ce que les moyens (UE, UE1, UE2) pour déduire l'information sur la probabilité d'erreur de transmission sont reliés à une unité de transmission (RG1), qui est en mesure d'après les recommandations du CCITT d'insérer l'information sur la probabilité d'erreur de transmission à un emplacement prédéfini (F1) de la partie supérieure (SOH).

8. Dispositif selon la revendication 7, caractérisé en ce que plusieurs dispositifs régénérateurs (RE) selon la revendication 1 sont regroupés avec au moins un dispositif régénérateur (RG1) correspondant à la recommandation G.958 du CCITT en un poste régénérateur (RS) et les lignes d'erreur (FL) sont reliées par une interface (INF) au dispositif régénérateur (RG1) correspondant à la recommandation G.958 du CCITT.

9. Dispositif selon la revendication 7 ou 8, caractérisé en ce que, pour l'analyse de l'information sur la probabilité d'erreur de transmission (F1) qui est insérée dans la partie supérieure (SOH) du cadre multiplex, il est relié à une centrale (Z), dans laquelle l'information sur la probabilité d'erreur de transmission est analysée ou transmise.

10. Dispositif selon la revendication 6, caractérisé en ce que la sortie est reliée à une centrale (Z), dans laquelle l'information sur la probabilité d'erreur de transmission est analysée ou transmise.

11. Dispositif selon l'une quelconque des revendications 6 à 10, caractérisé en ce que la détection d'erreur de transmission (UE, UE1, UE2) est conçue de façon intégrée avec le circuit de synchronisation pour la synchronisation du cadre multiplex.
